(19) Europäisches Patentamt
European Patent Office
Office européen des brevets

(11) **EP 2 692 811 A1**

(12) **EUROPEAN PATENT APPLICATION**
published in accordance with Art. 153(4) EPC

(43) Date of publication:
**05.02.2014 Bulletin 2014/06**

(21) Application number: **12765221.2**

(22) Date of filing: **26.03.2012**

(51) Int Cl.:
*C09J 133/06* (2006.01)    *C09J 7/02* (2006.01)
*C09J 11/02* (2006.01)    *C09J 133/08* (2006.01)
*C09J 133/14* (2006.01)    *C09J 183/12* (2006.01)
*G02B 5/30* (2006.01)

(86) International application number:
**PCT/JP2012/057800**

(87) International publication number:
**WO 2012/133343 (04.10.2012 Gazette 2012/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2011 JP 2011070407**

(71) Applicant: **Nippon Carbide Industries Co., Inc.
Minato-ku, Tokyo 108-8466 (JP)**

(72) Inventors:
• **KAMOI, Akira**
  **Sano-shi**
  **Tochigi 327-0816 (JP)**
• **MIYAZAKI, Hideki**
  **Sano-shi**
  **Tochigi 327-0816 (JP)**

(74) Representative: **von Kreisler Selting Werner
Deichmannhaus am Dom
Bahnhofsvorplatz 1
50667 Köln (DE)**

(54) **ADHESIVE COMPOSITION AND FILM FOR OPTICAL MEMBER**

(57)    The invention provides a pressure-sensitive adhesive composition including: an acrylic copolymer (A) containing 40% to 80% by mass of a constituent unit derived from a (meth)acrylic acid alkyl ester having a $C_{1-5}$ alkyl group, 10% to 59.9% by mass of a constituent unit derived from a (meth)acrylic acid alkyl ester having a $C_{6-18}$ alkyl group, and 0.1 % to 10% by mass of a constituent unit derived from a monomer having a hydroxyl group; a polyoxyalkylene group-containing copolymer (B) having a weight average molecular weight of 3,000 to 100,000 and containing 60% by mass or less of a constituent unit derived from a polyoxyalkylene group-containing monomer having an average addition mole number of alkylene oxide units of 20 or more; an alkali metal salt (C); and a dimethylpolysiloxane compound (D) having a polyoxyalkylene group in a molecule and having an HLB value of 9 or less.

FIG.1

## Description

TECHNICAL FIELD

The invention relates to a pressure-sensitive adhesive composition and a film for an optical member.

BACKGROUND ART

Since a liquid crystal display plate is thin and lightweight and has low electric power consumption, liquid crystal display plates have been used in recent years as screen display devices for various information-related devices such as personal computers. In such a liquid crystal display plate, an optical member such as a polarizing plate or a retardation plate is used together with a glass cell (liquid crystal cell) including a liquid crystal that is the main body thereof.

Such an optical member is ordinarily adhesive-coated with a surface protection film so as not to be contaminated or damaged at the surface through respective processes such as punching, inspection, transport, and assembly of a liquid crystal display plate, and is formed as a long laminate of the optical member. Then, the surface protection film is peeled and removed from the optical member at a stage when the surface protection becomes unnecessary.

The surface protection film for an optical member needs to have a pressure-sensitive adhesive force to adhere to the surface of the member so as not to slide on the surface and not to come off from the surface during the time when the surface protection for the optical member is necessary, and also needs to have a property (fittability) such that the edge of the surface protection film, which has been peeled in a process of cutting the optical member laminate or the like, is spontaneously restored to its original state.

In addition, a surface protection film is attached in order to protect the surface of the optical member from being contaminated or damaged, and the surface of the protection film is under an environment vulnerable to external stress due to collision or friction between the articles, and the like. Accordingly, the surface protection film needs to have a property such that the pressure-sensitive adhesive layer can be peeled without transfer to the optical member even when the surface protection film is subj ected to such external stress (anti-adhesive transfer property).

Furthermore, an optical member or a surface protection film generally consists of  plastic, and thus has high electric insulation and generates static electricity at the time of friction or peeling. Thus, generation of static electricity is unavoidable at the time when the surface protection film is peeled from the optical member. If static electricity is generated at the time when the surface protection film is peeled from the optical member, dirt or dust is adsorbed to the surface of the optical film, resulting in disadvantages in the product. In addition, if strong static electricity is generated at the time when the protection film is peeled, a circuit of a display member may be destroyed.

In relation to the above, Japanese Patent Application Laid-Open (JP-A) No. 2009-275128 discloses a pressure-sensitive adhesive including an acrylic copolymer, a metal salt, and an organopolysiloxane having a polyoxyalkylene group. However, it has been difficult for the pressure-sensitive adhesive composition described in JP-A No. 2009-275128 to satisfy all of suppression of generation of static electricity caused by peeling charging, adhesiveness, and anti-adhesive transfer property.

SUMMARY OF INVENTION

TECHNICAL PROBLEM

An object of the invention is to provide a pressure-sensitive adhesive composition that suppresses generation of static electricity due to peeling charging and is excellent in adhesiveness and anti-adhesive transfer property, and a film for an optical member prepared using the same.

SOLUTION TO PROBLEM

The invention encompasses the following embodiments.

(1) A pressure-sensitive adhesive composition comprising:

an acrylic copolymer (A) containing 40% to 80% by mass of a constituent unit derived from a (meth)acrylic acid alkyl ester having a $C_{1-5}$ alkyl group, 10% to 59.9% by mass of a constituent unit derived from a (meth)acrylic acid alkyl ester having a $C_{6-18}$ alkyl group, and 0.1% to 10% by mass of a constituent unit derived from a monomer having a hydroxyl group;
a polyoxyalkylene group-containing copolymer (B) containing a constituent unit derived from a polyoxyalkylene group-containing monomer having an average addition mole number of alkylene oxide units of 20 or more and a constituent unit derived from a monomer other than the polyoxyalkylene group-containing monomer, the copolymer (B) having a content ratio of the constituent unit derived from the polyoxyalkylene group-containing monomer of 60% by mass or less, and the copolymer (B) having a weight average molecular weight of from 3,000 to 100,000;

an alkali metal salt (C); and

a dimethylpolysiloxane compound (D) having a polyoxyalkylene group in a molecule and having an HLB value of 9 or less.

(2) The pressure-sensitive adhesive composition according to the above (1), wherein the HLB value of the dimethylpolysiloxane compound (D) is from 5 to 8.

(3) The pressure-sensitive adhesive composition according to the above (1) or (2), wherein a content of the polyoxyalkylene group-containing copolymer (B), and a content of the alkali metal salt (C) are from 0.05 to 2.0 parts by mass, and from 0.01 to 0.6 parts by mass, respectively, with respect to 100 parts by mass of the acrylic copolymer (A).

(4) The pressure-sensitive adhesive composition according to any one of the above (1) to (3), wherein a content of the dimethylpolysiloxane compound (D) is from 0.01 to 1.0 parts by mass with respect to 100 parts by mass of the acrylic copolymer (A).

(5) The pressure-sensitive adhesive composition according to any one of the above (1) to (4), wherein the (meth) acrylic acid alkyl ester having a $C_{1-5}$ alkyl group is n-butyl (meth)acrylate.

(6) The pressure-sensitive adhesive composition according to any one of the above (1) to (5), wherein the (meth) acrylic acid alkyl ester having a $C_{6-18}$ alkyl group is 2-ethylhexyl acrylate.

(7) A film for an optical member, comprising:

a substrate; and

a pressure-sensitive adhesive layer that is provided on the substrate and is a coating film of the pressure-sensitive adhesive composition according to any one of the above (1) to (6).

ADVANTAGEOUS EFFECTS OF INVENTION

According to the invention, it is possible to provide a pressure-sensitive adhesive composition that suppresses generation of static electricity due to peeling charging and is excellent in adhesiveness and anti-adhesive transfer property, and a film for an optical member prepared using the same.

BRIEF DESCRIPTION OF DRAWINGS

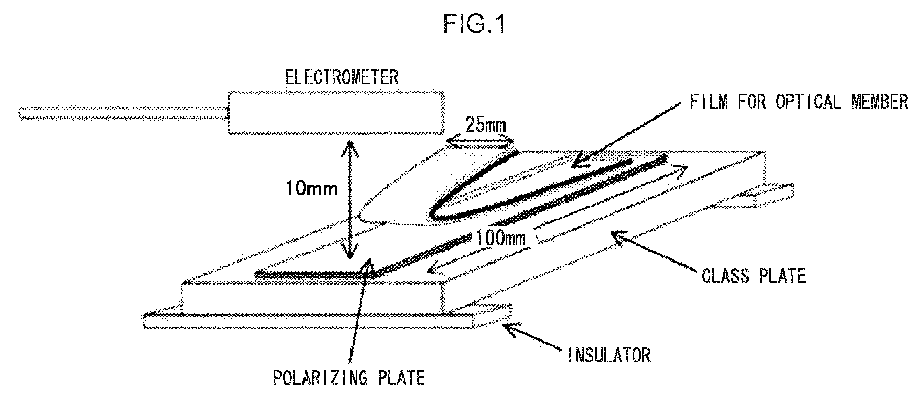

Fig. 1 is a schematic diagram that illustrates a method of measuring the peeling-charged electrostatic potential in the present Example.

DESCRIPTION OF EMBODIMENTS

[Pressure-sensitive adhesive composition]

The pressure-sensitive adhesive composition of the invention includes: an acrylic copolymer (A) containing 40% to 80% by mass of a constituent unit derived from a (meth)acrylic acid alkyl ester having a $C_{1-5}$ alkyl group, 10% to 59.9% by mass of a constituent unit derived from a (meth)acrylic acid alkyl ester having a $C_{6-18}$ alkyl group, and 0.1% to 10% by mass of a constituent unit derived from a monomer having a hydroxyl group; a polyoxyalkylene group-containing copolymer (B) containing a constituent unit derived from a polyoxyalkylene group-containing monomer having an average addition mole number of alkylene oxide units of 20 or more and a constituent unit derived from a monomer other than the polyoxyalkylene group-containing monomer, the copolymer (B) having a content ratio of the constituent unit derived from the polyoxyalkylene group-containing monomer of 60% by mass or less, and the copolymer (B) having a weight average molecular weight of from 3,000 to 100,000; an alkali metal salt (C); and a dimethylpolysiloxane compound (D) having a polyoxyalkylene group in a molecule and having an HLB value of 9 or less. The above-mentioned pressure-sensitive adhesive composition may contain other ingredients as necessary.

The pressure-sensitive adhesive composition having the specific constitutions described above suppresses generation of static electricity caused by peeling charging, and is excellent in adhesiveness and anti-adhesive transfer property.

The "(meth)acryl" in the present specification is used to mean at least one of "acryl" or "methacryl". In addition, similarly, "(meth)acrylate" is used to mean at least one of "acrylate" or "methacrylate". In addition, the numerical range represented with "to" represents a range covering the numbers described before and after "to" as the minimum value and the maximum value, respectively. Furthermore, in a case in which a substance corresponding to each ingredient in the composition is present in a plural number, the amount of each ingredient in the composition means the total amount of the corresponding plural number of the substances present in the composition unless otherwise stated.

(A) Acrylic copolymer

The pressure-sensitive adhesive composition described above contains at least one kind of an acrylic copolymer containing 40% to 80% by mass of a constituent unit derived from a (meth)acrylic acid alkyl ester having a $C_{1-5}$ alkyl group, 10% to 59.9% by mass of a constituent unit derived from a (meth)acrylic acid alkyl ester having a $C_{6-18}$ alkyl group and 0.1% to 10% by mass of a constituent unit derived from a monomer having a hydroxyl group. Herein, the "constituent unit derived from a (meth)acrylic acid alkyl ester" means a constituent unit formed by addition polymerization of a (meth)acrylic acid alkyl ester with another monomer. The same is true of the "constituent unit derived from a monomer" and the like.

The acrylic copolymer (A) described above contains the constituent unit derived from a (meth)acrylic acid alkyl ester having a $C_{1-5}$ alkyl group in a content ratio of from 40% to 80% by mass. This results in a pressure-sensitive adhesive force to adhere to the surface of the member so as not to slide on the surface and not to come off from the surface during the time when the surface protection for the optical member is necessary. The alkyl group of the (meth) acrylic acid alkyl ester described above is a $C_{1-5}$ alkyl group, preferably $C_{1-4}$ alkyl group, and particularly preferably a $C_4$ alkyl group.

Examples of the (meth)acrylic acid alkyl ester having a $C_{1-5}$ alkyl group described above may include, for example, methyl (meth)acrylate, ethyl (meth)acrylate, n-butyl (meth)acrylate, i-butyl (meth)acrylate, s-butyl (meth)acrylate, and t-butyl (meth)acrylate. Among them, because of being excellent in balance between adhesiveness and fittability, it is preferably n-butyl (meth)acrylate or i-butyl (meth)acrylate, which is a (meth)acrylic acid alkyl ester having a $C_4$ alkyl group, and is particularly preferably n-butyl (meth)acrylate.

The acrylic copolymer (A) described above may contain one kind, or two or more kinds of the constituent unit derived from a (meth)acrylic acid alkyl ester having a $C_{1-5}$ alkyl group.

The content ratio of the constituent unit derived from a (meth)acrylic acid alkyl ester having a $C_{1-5}$ alkyl group in the acrylic copolymer (A) described above is 40% to 80% by mass, preferably 40% to 70% by mass, and more preferably 40% to 60% by mass. If the content ratio of the (meth)acrylic acid alkyl ester having a $C_{1-5}$ alkyl group is less than 40% by mass in the total mass of the acrylic copolymer (A), sliding on the surface of the optical member or coming off from the surface may occur during the time when the surface protection for the optical member is necessary. In addition, if the content ratio of the (meth)acrylic acid alkyl ester having a $C_{1-5}$ alkyl group is more than 80% by mass in the total mass of the acrylic copolymer (A), the fittability and the anti-adhesive transfer property tend to decrease.

The acrylic copolymer (A) described above contains the constituent unit derived from the (meth)acrylic acid alkyl ester having a $C_{6-18}$ alkyl group in a content ratio of from 10% to 59.9% by mass. The alkyl group of the (meth) acrylic acid alkyl ester described above is a $C_{6-18}$ alkyl group, but preferably a $C_{6-10}$ alkyl group, and particularly preferably a $C_8$ alkyl group from a viewpoint of adhesiveness to a substrate.

Examples of the (meth)acrylic acid alkyl ester having a $C_{6-18}$ alkyl group described above may include, for example, n-octyl (meth)acrylate, i-octyl (meth)acrylate, 2-ethylhexyl (meth)acrylate, n-nonyl (meth)acrylate, i-nonyl (meth)acrylate, n-decyl (meth)acrylate, n-dodecyl (meth)acrylate, and stearyl (meth)acrylate. Among them, it is preferably at least one kind selected from a group consisting of n-octyl (meth)acrylate, i-octyl (meth)acrylate and 2-ethylhexyl (meth) acrylate, each of which is a (meth)acrylic acid alkyl ester having a $C_8$ alkyl group, and is particularly preferably 2-ethylhexyl acrylate.

The acrylic copolymer (A) described above may contain one kind, or two or more kinds of the constituent unit derived from the (meth)acrylic acid alkyl ester having a $C_{6-18}$ alkyl group.

The content ratio of the constituent unit derived from the (meth)acrylic acid alkyl ester having a $C_{6-18}$ alkyl group in the acrylic copolymer (A) described above is 10% to 59.9% by mass, preferably 30% to 58% by mass, and more preferably 40% to 58% by mass. If the content ratio of the constituent unit derived from the (meth)acrylic acid alkyl ester having a $C_{6-18}$ alkyl group is less than 10% by mass in the total mass of the acrylic copolymer (A), the fittability tends to decrease. In addition, if the content ratio of the (meth)acrylic acid alkyl ester having a $C_{6-18}$ alkyl group is more than 59.9% by mass in the total mass of the acrylic copolymer (A), adhesiveness to a substrate tends to decrease.

The acrylic copolymer (A) described above contains the constituent unit derived from a monomer having a hydroxyl group in a content ratio of from 0.1% to 10% by mass. This results in a moderate pressure-sensitive adhesive force with respect to the adherend and also excellent re-peeling property. Examples of the monomer having a hydroxyl group may include a (meth)acrylic monomer having a hydroxyl group and other monomers having a hydroxyl group.

Examples of the (meth)acrylic monomer having a hydroxyl group may include, for example, 2-hydroxyethyl (meth)acrylate, 2-hydroxypropyl (meth)acrylate, 3-hydroxypropyl (meth)acrylate, 4-hydroxybutyl (meth)acrylate, 3-methyl-3-hydroxybutyl (meth)acrylate, 1,1-dimethyl-3-butyl (meth)acrylate, 1,3-dimethyl-3-hydroxybutyl (meth)acrylate, 2,2,4-trimethyl-3-hydroxypentyl (meth)acrylate, 2-ethyl-3-hydroxyhexyl (meth)acrylate, glycerin mono(meth)acrylate, polypropylene glycol mono(meth)acrylate, polyethylene glycol mono(meth)acrylate, and poly(ethylene glycol-propylene glycol) mono(meth)acrylate. Examples of other monomers having a hydroxyl group may include N-methylol acryl amide, allyl alcohol, and methallyl alcohol.

Among these monomers having a hydroxyl group, at least one kind selected from a group consisting of 2-hydroxyethyl (meth)acrylate and 4-hydroxybutyl (meth)acrylate is preferably used from a viewpoint of good compatibility with other monomers and copolymerizability in synthesis of the acrylic copolymer (A), and good crosslinking reaction with a crosslinking agent.

The acrylic copolymer (A) described above may contain one kind, or two or more kinds of the constituent unit derived from a monomer having a hydroxyl group.

The content ratio of the constituent unit derived from a monomer having a hydroxyl group in the acrylic copolymer (A) described above is 0.1 to 10% by mass, and more preferably 2% to 5% by mass in the total mass of the acrylic copolymer (A). If the content ratio of the constituent unit derived from a monomer having a hydroxyl group is less than 0.1 % by mass, the cohesive force is insufficient, and contamination of the adherend tends to occur. On the other hand, if the content ratio is more than 10% by mass, the fittability tends to decrease.

In addition to the constituent unit derived from the (meth)acrylic acid alkyl ester having a $C_{1-5}$ alkyl group, the constituent unit derived from the (meth)acrylic acid alkyl ester having a $C_{6-18}$ alkyl group, and the constituent unit derived from a monomer having a hydroxyl group, the acrylic copolymer (A) described above may further contain a constituent unit derived from another monomer other than these monomers as necessary. The acrylic copolymer (A) described above may contain one kind, or two or more kinds of the constituent unit derived from another monomer.

Examples of another monomer may include monomers other than an acrylic monomer, and monomers having a functional group other than a hydroxyl group. Examples of the monomer having a functional group other than a hydroxyl group may include, for example, a carboxy group-containing monomer, a glycidyl group-containing monomer, an amide group- or N-substituted amide group-containing monomer, and a tertiary amino group-containing monomer.

Examples of the monomer other than an acrylic monomer may include, for example, aromatic monovinyl monomers such as styrene, α-methyl styrene, t-butyl styrene, p-chlorostyrene, chloromethyl styrene and vinyl toluene; vinyl cyanide monomers such as acrylonitrile and methacrylonitrile; vinyl ester monomers such as vinyl formate, vinyl acetate, vinyl propionate and vinyl versatate; and further various derivatives thereof.

Examples of the carboxy group-containing monomer may include, for example, acrylic acid, methacrylic acid, maleic acid, maleic anhydride, fumaric acid, crotonic acid, itaconic acid, citraconic acid, cinnamic acid, succinic acid monohydroxyethyl (meth)acrylate, maleic acid monohydroxyethyl (meth)acrylate, fumaric acid monohydroxyethyl (meth)acrylate, phthalic acid monohydroxyethyl (meth)acrylate, 1,2-dicarboxycyclohexane monohydroxyethyl (meth)acrylate, (meth)acrylic acid dimer, and ω-carboxy-polycaprolactone mono(meth)acrylate.

Examples of the glycidyl group-containing monomer may include, for example, glycidyl (meth)acrylate, 3,4-epoxycyclohexyl methyl (meth)acrylate, glycidyl vinyl ether, 3,4-epoxycyclohexyl vinyl ether, glycidyl (meth)allyl ether, and 3,4-epoxycyclohexyl (meth)allyl ether.

Examples of the amide group- or N-substituted amide group-containing monomer may include, for example, acryl amide, methacryl amide, N-methyl(meth)acryl amide, N-ethyl(meth)acryl amide, N-methoxymethyl(meth)acryl amide, N-ethoxymethyl(meth)acryl amide, N-propoxymethyl(meth)acryl amide, N-butoxymethyl(meth)acryl amide, N-tert-butylacryl amide, N-octyl acryl amide, and diacetone acryl amide.

Examples of the tertiary amino group-containing monomer may include, for example, dimethylaminoethyl (meth)acrylate, diethylaminoethyl (meth)acrylate, and dimethylaminopropyl(meth)acryl amide.

In a case in which the acrylic copolymer (A) described above further contains the constituent unit derived from another monomer, the content ratio thereof is preferably 10% by mass or less, and more preferably 3% by mass or less.

The content ratio of the constituent unit derived from the (meth)acrylic acid alkyl ester having a $C_{6-18}$ alkyl group with respect to the constituent unit derived from the (meth)acrylic acid alkyl ester having a $C_{1-5}$ alkyl group (the constituent unit derived from the (meth)acrylic acid alkyl ester having a $C_{6-18}$ alkyl group/the constituent unit derived from the (meth)acrylic acid alkyl ester having a $C_{1-5}$ alkyl group) in the acrylic copolymer (A) described above is not particularly limited. For example, the content ratio is preferably 0.35 to 1.5, and more preferably 0.7 to 1.5 from a viewpoint of suppression of generation of static electricity caused by peeling, adhesiveness, and anti-adhesive transfer property.

In addition, the content ratio of the constituent unit derived from a monomer having a hydroxyl group with respect to the constituent unit derived from the (meth)acrylic acid alkyl ester having a $C_{1-5}$ alkyl group (the constituent unit derived from a monomer having a hydroxyl group/the constituent unit derived from the (meth)acrylic acid alkyl ester having a $C_{1-5}$ alkyl group) in the acrylic copolymer (A) described above is not particularly limited. For example, the content ratio is preferably 0.04 to 0.13 from a viewpoint of suppression of generation of static electricity caused by peeling, adhesiveness, and adhesive transfer property.

Furthermore, the content ratio of the constituent unit derived from a monomer having a hydroxyl group with respect to the total content of the constituent unit derived from the (meth)acrylic acid alkyl ester having a $C_{1-5}$ alkyl group and the constituent unit derived from the (meth)acrylic acid alkyl ester having a $C_{6-18}$ alkyl group (hereinafter, collectively also referred to as the "constituent unit derived from the (meth)acrylic acid alkyl ester") (the constituent unit derived from a monomer having a hydroxyl group/the constituent unit derived from the (meth)acrylic acid alkyl ester) in the acrylic copolymer (A) described above is not particularly limited. For example, the content ratio is preferably 0.02 to 0.05 from a viewpoint of suppression of generation of static electricity caused by peeling, adhesiveness, and anti-adhesive transfer property.

The acrylic copolymer (A) described above is preferably an acrylic copolymer (A) having a weight average molecular weight (Mw) of 200,000 to 1,000,000, and more preferably an acrylic copolymer (A) having a weight average molecular weight (Mw) of 300,000 to 700,000. The weight average molecular weight (Mw) is preferably equal to or more than the lower limit value, since the pressure-sensitive adhesive force is not too great at the time of re-peeling and the surface protection film can be easily peeled off. On the other hand, the weight average molecular weight (Mw) is preferably equal to or less than the upper limit value, since the fluidity of the obtained pressure-sensitive adhesive composition layer is excellent, and even when the adherend such as a polarizing plate has minute unevenness on the surface, the pressure-sensitive adhesive composition can sufficiently wet the surface of the adherend such as a polarizing plate and have excellent fittability.

In addition, the number average molecular weight (Mn) of the acrylic copolymer (A) described above is preferably 30,000 to 100,000. The number average molecular weight (Mn) is preferably equal to or more than the lower limit value, since the pressure-sensitive adhesive force is not too great at the time of re-peeling and the surface protection film can be easily peeled off. On the other hand, the number average molecular weight (Mn) is preferably equal to or less than the upper limit value, since the fluidity of the obtained pressure-sensitive adhesive composition layer is excellent, and even when the adherend such as a polarizing plate has minute unevenness on the surface, the pressure-sensitive adhesive composition can sufficiently wet the surface of the adherend such as a polarizing plate and have excellent fittability.

Furthermore, the ratio of the weight average molecular weight (Mw) with respect to the number average molecular weight (Mn), that is, the dispersity (Mw/Mn) of the acrylic copolymer (A) described above is not particularly limited. For example, the dispersity (Mw/Mn) of the acrylic copolymer (A) described above is preferably 3 to 10 from a viewpoint of suppression of generation of static electricity caused by peeling, adhesiveness and anti-adhesive transfer property.

Meanwhile, the weight average molecular weight (Mw) and number average molecular weight (Mn) of the acrylic copolymer (A) described above are values measured by the method described below.

(Method of measuring weight average molecular weight and number average molecular weight)

The weight average molecular weight (Mw) of the acrylic copolymer (A) is measured in accordance with the procedures (1)-(3) described below.

(1) An acrylic copolymer solution is applied to a release sheet, and dried at 100°C for 2 minutes, to obtain a film-shaped acrylic copolymer.
(2) The film-shaped acrylic copolymer obtained in (1) described above is dissolved in tetrahydrofuran to have a solid content of 0.2% by mass.
(3) The weight average molecular weight (Mw) and the number average molecular weight (Mn) of the acrylic copolymer are measured using gel permeation chromatography (GPC) at the conditions described below.

(Conditions)

GPC: HLC-8220 GPC [manufactured by TOSOH CORPORATION]
Column: TSK-GEL GMHXL, four columns used
Mobile phase solvent: tetrahydrofuran
Flow rate: 0.6 ml/min
Column temperature: 40°C

In addition, the glass transition temperature (Tg) of the acrylic copolymer (A) described above is preferably -45°C or less, more preferably from -80°C to -45°C, and further preferably from -80°C to -60°C. Tg is preferably -45°C or less, since sufficient fittability can be obtained.

Meanwhile, the glass transition temperature (Tg) of the acrylic copolymer (A) is a value obtained by conversion of the absolute temperature (K), which is obtained by calculation according to Equation 1 described below, to Celsius temperature (°C).

$$\text{Equation 1:} \qquad 1/Tg = w_1/Tg_1 + w_2/Tg_2 + \cdots\cdots + w_{(k-1)}/Tg_{(k-1)} + w_k/Tg_k$$

In Equation 1, each of $Tg_1$, $Tg_2$, ········, $Tg_{(k-1)}$ and $Tg_k$ represents the glass transition temperature (K) of the homopolymer of each monomer component constituting the acrylic copolymer. Each of $w_1$, $w_2$, ········, $w_{(k-1)}$, and $w_k$ represents the mass fraction of each monomer component constituting the acrylic copolymer, and satisfies $w_1 + w_2 +$ ········ $+ w_{(k-1)} + w_k = 1$.

The content ratio of the acrylic copolymer (A) in the pressure-sensitive adhesive composition described above is, for example, preferably 90 to 98% by mass in the total mass of the pressure-sensitive adhesive composition from a viewpoint of suppression of generation of static electricity caused by peeling, adhesiveness, and anti-adhesive transfer property.

(B) Polyoxyalkylene group-containing copolymer

The pressure-sensitive adhesive composition described above contains at least one kind of a polyoxyalkylene group-containing copolymer (B) containing a constituent unit derived from a polyoxyalkylene group-containing monomer having an average addition mole number of alkylene oxide units of 20 or more and a constituent unit derived from a monomer other than the polyoxyalkylene group-containing monomer, the copolymer (B) having a content ratio of the constituent unit derived from the polyoxyalkylene group-containing monomer of 60% by mass or less, and the copolymer (B) having a weight average molecular weight of from 3,000 to 100,000.

Examples of the polyoxyalkylene group-containing monomer described above may include, for example, a polyoxyalkylene group-containing (meth)acrylic monomer having a polyoxyethylene group or a polyoxypropylene group. Examples of the polyoxyalkylene group-containing (meth)acrylic monomer may include specifically, polyethylene glycol (meth)acrylate, methoxypolyethylene glycol (meth)acrylate, methoxypolypropylene glycol (meth)acrylate, and polypropylene glycol (meth)acrylate. Among them, the polyoxyalkylene group-containing (meth)acrylic monomer is preferably at least one kind selected from a group consisting of methoxypolyethylene glycol (meth)acrylate and methoxypolypropylene glycol (meth)acrylate, and more preferably methoxypolyethylene glycol (meth)acrylate.

In addition, the average addition mole number of alkylene oxide units in the above-mentioned polyoxyalkylene group-containing monomer is not particularly limited as long as it is 20 or more. If the average addition mole number of alkylene oxide units is less than 20, sufficient antistatic effect may not be exerted by the combination with the alkali metal salt described later. The average addition mole number of alkylene oxide units is preferably 20 to 100, and more preferably 20 to 50. When the average addition mole number of alkylene oxide units is within the range described above, better antistatic effect and adhesiveness can be exerted.

The content ratio of the constituent unit derived from a polyoxyalkylene group-containing monomer in the polyoxyalkylene group-containing copolymer (B) described above is 60% by mass or less, preferably from 10% to 60% by mass, and more preferably from 10% to 30% by mass in the total mass of the polyoxyalkylene group-containing copolymer (B) described above. If the content ratio of the constituent unit derived from a polyoxyalkylene group-containing monomer is more than 60% by mass, the adhesiveness tends to decrease.

The polyoxyalkylene group-containing copolymer (B) described above further contains at least one kind of another constituent unit other than the constituent unit derived from a polyoxyalkylene group-containing monomer. Examples of a monomer that can form another constituent unit may include, for example, a (meth)acrylic acid alkyl ester, and a monomer having a functional group such as a carboxy group or a hydroxyl group.

Examples of the (meth)acrylic acid alkyl ester may include, for example, the (meth)acrylic acid alkyl ester having a $C_{1-5}$ alkyl group and the (meth)acrylic acid alkyl ester having a $C_{6-18}$ alkyl group in the acrylic copolymer (A) described above. Among them, the (meth)acrylic acid alkyl ester is preferably at least one kind of the (meth)acrylic acid alkyl ester having a $C_{1-5}$ alkyl group, and more preferably at least one kind of the (meth)acrylic acid alkyl ester having a $C_{3-5}$ alkyl group, and further preferably at least one kind of the (meth)acrylic acid alkyl ester having a $C_4$ alkyl group from a viewpoint of adhesiveness to a substrate. Specific examples of the (meth)acrylic acid alkyl ester having a $C_{1-5}$ alkyl group are similar to those described above.

In addition, examples of the monomer having a functional group such as a carboxy group or a hydroxyl group may include monomers having a hydroxyl group and other monomers in the acrylic copolymer (A) described above.

The polyoxyalkylene group-containing copolymer (B) described above preferably contains at least one kind of a constituent unit derived from a (meth)acrylic acid alkyl ester, more preferably contains at least one kind of a constituent unit derived from a (meth)acrylic acid alkyl ester having a $C_{1-5}$ alkyl group, further preferably contains at least one kind of a constituent unit derived from a (meth)acrylic acid alkyl ester having a $C_{3-5}$ alkyl group, and particularly preferably contains a constituent unit derived from at least one kind selected from a group consisting of n-butyl (meth)acrylate, i-butyl (meth)acrylate, s-butyl (meth)acrylate and t-butyl (meth)acrylate, as another constituent unit in addition to the constituent unit derived from a polyoxyalkylene group-containing monomer.

The content ratio of another constituent unit in the polyoxyalkylene group-containing copolymer (B) described above is preferably 40 to 90% by mass, and more preferably 70 to 90% by mass in the total mass of the polyoxyalkylene group-containing copolymer (B). When the content ratio of another constituent unit is within the above-mentioned range, there is a tendency that suppression of generation of static electricity caused by peeling charging is more excellent, and better adhesiveness is exhibited.

In a case in which the polyoxyalkylene group-containing copolymer (B) described above contains the constituent unit derived from a (meth)acrylic acid alkyl ester as another constituent unit in addition to the constituent unit derived from a polyoxyalkylene group-containing monomer, the content ratio of the constituent unit derived from a (meth)acrylic acid alkyl ester with respect to the constituent unit derived from a polyoxyalkylene group-containing monomer in the polyoxyalkylene group-containing copolymer (B) is preferably 0.1 to 0.5 from a viewpoint of suppression of generation of static electricity, and adhesiveness.

The weight average molecular weight (Mw) of the polyoxyalkylene group-containing copolymer (B) described above is 3,000 to 100,000, preferably 5,000 to 60,000, and more preferably 5,000 to 30,000. If the weight average molecular weight (Mw) is less than 3,000, sufficient pressure-sensitive adhesive force may not be obtained. In addition, if the weight average molecular weight (Mw) is more than 100,000, the compatibility in the pressure-sensitive adhesive composition may decrease.

Meanwhile, the weight average molecular weight (Mw) of the polyoxyalkylene group-containing copolymer (B) described above can be measured with a method similar to the method of measuring the weight average molecular weight (Mw) of the acrylic copolymer (A) described above.

The content of the polyoxyalkylene group-containing copolymer (B) described above in the pressure-sensitive adhesive composition is preferably 0.05 to 2.0 parts by mass, more preferably 0.1 to 1.5 parts by mass, and further preferably 0.2 to 1.0 parts by mass with respect to 100 parts by mass of the acrylic copolymer (A) described above. When the content of the polyoxyalkylene group-containing copolymer (B) is 0.05 parts by mass or more with respect to 100 parts by mass of the acrylic copolymer (A), better antistatic effect tends to be obtained. In addition, when the content of the polyoxyalkylene group-containing copolymer (B) is 2.0 parts by mass or less with respect to 100 parts by mass of the acrylic copolymer (A), there is a tendency that contamination of the adherend can be suppressed more effectively.

The acrylic copolymer (A) and the polyoxyalkylene group-containing copolymer (B) described above (hereinafter, these may be collectively called the "copolymer") can be produced by polymerizing a mixture of monomers that can form the constituent units contained in the copolymer. The method of polymerizing the copolymer described above is not particularly limited, and may be suitably selected from known methods such as a solution polymerization method, an emulsion polymerization method and a suspension polymerization method. The copolymer is preferably polymerized by the solution polymerization method because the treatment process can be performed relatively simply for a short time in the production of the pressure-sensitive adhesive composition of the invention using the copolymer obtained by the polymerization.

The solution polymerization method may be performed generally using a known method, for example, a method in which a polymerization bath is charged with a prescribed organic solvent, a monomer, a polymerization initiator, and a chain-transfer agent used as necessary, and heated with stirring for several hours at reflux temperature of the organic solvent under nitrogen gas flow.

Meanwhile, the weight average molecular weights and the dispersities of the acrylic copolymer (A) and the polyoxyalkylene group-containing copolymer (B) described above may be easily regulated depending on the reaction temperature, the reaction time, the amount of the solvent, and the kind or the amount of the catalyst.

Examples of the organic solvent for the polymerization used in polymerization of the acrylic copolymer (A) and the polyoxyalkylene group-containing copolymer (B) may include, for example, aromatic hydrocarbons such as benzene, toluene, ethyl benzene, n-propyl benzene, t-butyl benzene, o-xylene, m-xylene, p-xylene, tetraline, decaline and aromatic naphtha; aliphatic or alicyclic hydrocarbons such as n-hexane, n-heptane, n-octane, i-octane, n-decane, dipentene, petroleum spirit, petroleum naphtha and turpentine oil; esters such as ethyl acetate, n-butyl acetate, n-amyl acetate, 2-hydroxyethyl acetate, 2-butoxyethyl acetate, 3-methoxybutyl acetate and methyl benzoate; ketones such as acetone, methylethyl ketone, methyl-i-butyl ketone, isophorone, cyclohexanone and methylcyclohexanone; glycol ethers such as ethylene glycol monomethyl ether, ethylene glycol monoethyl ether, ethylene glycol monobutyl ether, diethylene glycol monomethyl ether, diethylene glycol monoethyl ether and diethylene glycol monobutyl ether; and alcohols such as methyl alcohol, ethyl alcohol, n-propyl alcohol, i-propyl alcohol, n-butyl alcohol, i-butyl alcohol, s-butyl alcohol and t-butyl alcohol. Each of these organic solvents may be used alone, or as a mixture of two or more kinds.

As the polymerization initiator, an organic peroxide, an azo compound or the like may be used, which can be used in an ordinary solution polymerization method. Examples of the organic peroxide include, for example, t-butylhydroperoxide, cumene hydroxide, dicumyl peroxide, benzoyl peroxide, lauroyl peroxide, caproyl peroxide, di-i-propyl peroxydicarbonate, di-2-ethylhexyl peroxydicarbonate, t-butylperoxypivalate, 2,2-bis(4,4-di-t-butylperoxycyclohexyl) propane, 2,2-bis(4,4-di-t-amylperoxycyclohexyl) propane, 2,2-bis(4,4-di-t-octyl peroxycyclohexyl) propane, 2,2-bis(4,4-di-$\alpha$-cumylperoxycyclohexyl) propane, 2,2-bis(4,4-di-t-butylperoxycyclohexyl) butane, and 2,2-bis(4,4-di-t-octyl peroxycyclohexyl) butane. Examples of the azo compound include, for example, 2,2'-azobis-i-butyronitrile, 2,2'-azobis-2,4-dimethylvaleronitrile, and 2,2'-azobis-4-methoxy-2,4-dimethylvaleronitrile.

In addition, although a chain-transfer agent is not used ordinarily in the production of the acrylic copolymer (A) and the polyoxyalkylene group-containing copolymer (B), the chain-transfer agent may be used as necessary within a scope where the object and the effect of the invention are not harmed. Examples of the chain-transfer agent include, for example, cyanoacetic acid; $C_{1-8}$ alkyl esters of cyanoacetic acid; bromoacetic acid; $C_{1-8}$ alkyl esters of bromoacetic acid; aromatic compounds such as anthracene, phenanthrene, fluorene and 9-phenylfluorene; aromatic nitro compounds such as p-nitroaniline, nitrobenzene, dinitrobenzene, p-nitrobenzoic acid, p-nitrophenol and p-nitrotoluene; benzoquinone derivatives such as benzoquinone and 2,3,5,6-tetramethyl-p-benzoquinone; borane derivatives such as tributyl borane; halogenated hydrocarbons such as carbon tetrabromide, carbon tetrachloride, 1,1,2,2-tetrabromoethane, tribromoethylene, trichloroethylene, bromotrichloromethane, tribromomethane and 3-chloro-1-propene; aldehydes such as chloral and furaldehyde; $C_{1-18}$ alkyl mercaptans; aromatic mercaptans such as thiophenol and toluene mercaptan; mercap-toacetic acid and $C_{1-10}$ alkyl esters of mercaptoacetic acid; $C_{1-12}$ hydroxyalkyl mercaptans; and terpenes such as pinene and terpinolene.

The polymerization temperature is generally in a range of about 30 to 180°C.

A purification process of purifying the polymer obtained in the polymerization reaction may be provided in the production of the acrylic copolymer (A) and the polyoxyalkylene group-containing copolymer (B). In a case in which unreacted monomer is contained in a polymer obtained with the solution polymerization method and the like, the unreacted monomer can be removed by the purification process. The purification process may be suitably selected from purification methods ordinarily used. For example, the purification process may be a reprecipitation method by methanol and the like.

(C) Alkali metal salt

The pressure-sensitive adhesive composition described above contains at least one kind of an alkali metal salt (C). The alkali metal salt (C) is a metal salt having lithium, sodium, potassium or the like as a cation. Specifically, a metal salt is suitably used, which consists of a cation such as $Li^+$, $Na^+$ or $K^+$, and an anion such as $Cl^-$, $Br^-$, $I^-$, $BF_4^-$, $PF_6^-$, $SCN^-$, $ClO_4^-$, $CF_3SO_3^-$, $(CF_3SO_2)_2N^-$, $(C_2F_5SO_2)_2N^-$ or $(CF_3SO_2)_3C^-$. Particularly, a lithium salt such as LiBr, LiI, $LiBF_4$, $LiPF_6$, LiSCN, $LiClO_4$, $LiCF_3SO_3$, $Li(CF_3SO_2)_2N$, $Li(C_2F_5SO_2)_2N$ or $Li(CF_3SO_2)_3C$ is preferably used. Among them, $LiCF_3SO_3$, and $Li(CF_3SO_2)_2N$ are particularly preferable since they have good antistatic effect and metal corrosiveness. These alkali metal salts may be used alone, or may be used in a mixture of two or more kinds.

The content of the alkali metal salt of the pressure-sensitive adhesive composition described above is preferably 0.01 to 0.6 parts by mass, and more preferably 0.01 to 0.2 parts by mass with respect to 100 parts by mass of the acrylic copolymer (A) described above. When the content of the alkali metal salt is 0.01 parts by mass or more with respect to 100 parts by mass of the acrylic copolymer (A), better charging property tends to be obtained. In addition, when the content of the alkali metal salt is 0.6 parts by mass or less, there is a tendency that contamination of the adherend can be suppressed more effectively.

(D) Dimethylpolysiloxane compound

The pressure-sensitive adhesive composition described above contains at least one kind of a dimethylpolysiloxane compound (D) having a polyoxyalkylene group in a molecule and having an HLB value of 9 or less. When the dimethylpolysiloxane compound (D) has a polyoxyalkylene group in a molecule and has a specific range of the HLB value, the dimethylpolysiloxane compound (D) can exhibit excellent antistatic performance and further be excellent in compatibility with a resin such as the copolymers constituting the pressure-sensitive adhesive composition, and exhibit moderate adhesiveness.

Examples of the polyoxyalkylene group described above include, for example, a polyoxyethylene group, a polyoxypropylene group, a polyoxybutylene group and a group derived from a block copolymer thereof.

The polyoxyalkylene group described above may be contained as a side chain of the dimethylpolysiloxane compound (D) or contained as a terminal group of the dimethylpolysiloxane compound (D), but is preferably contained as a side chain of the dimethylpolysiloxane compound (D) from a viewpoint of the pressure-sensitive adhesive force and the antistatic property.

In addition, the terminal group of the polyoxyalkylene group may be any one of a hydroxyl group, an alkoxy group and an acyloxy group.

The dimethylpolysiloxane compound (D) described above has an HLB value of 9 or less. If the HLB value of the dimethylpolysiloxane compound (D) is more than 9, the anti-adhesive transfer property or the peeling charging prevention performance tends to be worse. An increased addition amount of a dimethylpolysiloxane compound (D) having an HLB value of more than 9 may provide better anti-adhesive transfer property and peeling charging prevention performance, but tends to result in decreased pressure-sensitive adhesive force. Furthermore, the HLB value is preferably from 5 to 8 from a viewpoint of compatibility with the copolymers, surface localizability, and adhesiveness.

The HLB value described above is a scale representing the balance between the hydrophilicity and the hydrophobicity of the dimethylpolysiloxane compound (D). The HLB value in the invention is in accordance with the definition of Griffin method, which is calculated with Equation 2 described below. However, in a case in which the dimethylpolysiloxane compound (D) described above is a commercial product, a catalog data thereof is preferentially adopted.

$$\text{Equation 2:} \qquad \{(\text{Sum of formula weight of hydrophilic group moiety})/(\text{Molecular weight of surfactant})\} \times 20$$

As a method of adjusting the HLB value of the dimethylpolysiloxane compound (D) in the range described above, ordinarily used method may be used without particular limitation. For example, examples of the method may include a method by suitably selecting the molecular weight, and the content of the polyoxyalkylene group that is a hydrophilic group, of the dimethylpolysiloxane compound.

Specific examples of the dimethylpolysiloxane compound (D) having a polyoxyalkylene group and having an HLB value of 9 or less may include, for example, "L-7001" (HLB value of 5), "L-7002" (HLB value of 8), "SF-8427" (HLB value of 9), "SF-8428" (HLB value of 0), "SH-3749" (HLB value of 6), "SH-3773M" (HLB value of 8) and "SH-8400" (HLB value of 7) [all manufactured by Dow Coming Toray Co., Ltd.] and the like. Among them, the dimethylpolysiloxane compound (D) is preferably at least one kind selected from a group consisting of "L-7001" (HLB value of 5), "L-7002" (HLB value of 8), "SF-8427" (HLB value of 9), "SH-3749" (HLB value of 6), "SH-3773M" (HLB value of 8), and "SH-8400" (HLB value of 7), and more preferably at least one kind selected from a group consisting of "L-7001" (HLB value of 5), "SH-8400" (HLB value of 7), and "SH-3773M" (HLB value of 8).

The content of the dimethylpolysiloxane compound (D) in the pressure-sensitive adhesive composition described above is preferably 0.01 to 1.0 parts by mass, and more preferably 0.1 to 0.5 parts by mass with respect to 100 parts by mass of the acrylic copolymer (A) described above from a viewpoint of compatibility with the copolymers, surface localizability, and adhesiveness.

The content of the dimethylpolysiloxane compound (D) having a polyoxyalkylene group in the pressure-sensitive adhesive composition is preferably equal to or more than the lower limit value described above, since the pressure-sensitive adhesive layer can be peeled without transfer to the optical member even when the surface of the protection film is subjected to external stress, and there is also a tendency that generation of static electricity caused by peeling charging can be suppressed. In addition, the content of the dimethylpolysiloxane compound (D) having a polyoxyalkylene group in the pressure-sensitive adhesive composition is preferably equal to or less than the upper limit value described above, since change of adhesiveness with time, or surface contamination due to excessive residual dimethylsiloxane compound on the surface of the optical member tends to be suppressed.

(Crosslinking agent)

The pressure-sensitive adhesive composition described above preferably contains at least one kind of a crosslinking agent. The crosslinking agent described above is preferably at least one kind of an isocyanate compound, and more preferably at least one kind of a polyvalent isocyanate compound. By crosslinking the constituent ingredients of the pressure-sensitive adhesive composition with the crosslinking agent (preferably, an isocyanate compound), it is possible to further improve the cohesive force of the pressure-sensitive adhesive composition, and obtain a pressure-sensitive adhesive composition that is more excellent in the adhesive property.

Examples of the isocyanate compound may include, for example, aromatic isocyanates such as xylylene diisocyanate, diphenylmethane diisocyanate, triphenylmethane triisocyanate and tolylene diisocyanate; aliphatic or alicyclic isocyanates such as hexamethylene diisocyanate, isophorone diisocyanate and hydrogenated compounds of the aromatic isocyanate compounds described above; isocyanate compound derivatives derived from various isocyanates such as a dimer or trimer of the isocyanate compound or an adduct of the isocyanate compound and a polyol such as trimethylol propane. Among them, the isocyanate compound is preferably at least one kind selected from hexamethylene diisocyanate and an isocyanate compound derivative derived from hexamethylene diisocyanate. These isocyanate compounds may be used alone or as a mixture of two or more kinds.

As the isocyanate compound described above, those commercially marketed may be suitably used under the trade names of, for example, "CORONATE HX", "CORONATE HL-S", "CORONATE 2234", "AQUANATE 200" and "AQUANATE 210" [all manufactured by Nippon Polyurethane Industry Co., Ltd.], "DESMODUR N3400" and "DESMODUR N3300" [manufactured by Sumitomo Bayer Urethane Co., Ltd.], "DURANATE E-405-80T", "DURANATE 24A-100" and "DURANATE TSE-100" [manufactured by Asahi Kasei Corporation], "TAKENATE D-110N", "TAKENATE D-120N", "TAKENATE M-631N" and "MT-ORESTA NP1200" [all manufactured by MITSUI TAKEDA CHEMICALS INC.] and the like.

The content of these isocyanate compounds in the pressure-sensitive adhesive composition described above is preferably 0.01 to 15 parts by mass, and more preferably 0.5 to 5.0 parts by mass with respect to 100 parts by mass of the above-mentioned acrylic copolymer (A).

In addition, the pressure-sensitive adhesive composition described above may further contain a curing catalyst such as dibutyl tin dilaurate or dioctyl tin dilaurate as necessary.

The pressure-sensitive adhesive composition described above may further contain other additives in addition to the acrylic copolymer (A), the polyoxyalkylene group-containing copolymer (B), the alkali metal salt (C) and the dimethylpolysiloxane compound (D), and the isocyanate compound and the curing catalyst contained as necessary. The other additives may be suitably selected as necessary from additives ordinarily used in a pressure-sensitive adhesive composition. Examples of the other additives may include, for example, a weather-resistant stabilizer, a tackifier, a plasticizer, a softener, and inorganic filler.

The pressure-sensitive adhesive composition described above may further contain a solvent as necessary. The solvent is not particularly limited as long as it can dissolve the pressure-sensitive adhesive composition. The solvent may be suitably selected and used from those exemplified as the organic solvents for the polymerization mentioned previously depending on the object, and the like.

The pressure-sensitive adhesive composition described above may be prepared by mixing the acrylic copolymer (A), the polyoxyalkylene group-containing copolymer (B), the alkali metal salt (C), the dimethylpolysiloxane compound (D), and the isocyanate compound and the curing catalyst contained as necessary with an ordinarily used method.

The pressure-sensitive adhesive composition of the invention is used, for example, for forming a pressure-sensitive adhesive layer on at least one side of a suitable, transparent surface-protecting substrate by a conventionally known method in order to produce a surface protection film for an optical member.

[Film for optical member]

The film for an optical member of the invention has a substrate and a pressure-sensitive adhesive layer that is provided on the substrate and is a coating film of the pressure-sensitive adhesive composition described above. The film for an optical member described above may be further provided with another component as necessary. The film for an optical member described above is suitably used as a surface protection film for an optical member.

The substrate in the film for an optical member of the invention is not particularly limited as long as the pressure-sensitive adhesive composition can be applied to the substrate. Among them, the substrate is preferably a substrate containing a resin. Examples of the resin constituting the substrate may include films consisting of, for example, a polyester-based resin, an acetate-based resin, a polyether sulfone-based resin, a polycarbonate-based resin, a polyamide-based resin, a polyimide-based resin, a polyolefin-based resin, and an acrylic resin from a viewpoint of visual inspection or management of the optical member therethrough. Among them, the resin is preferably a polyester-based resin from a viewpoint of the surface protection performance, and particularly preferably a polyethylene terephthalate resin in consideration of the practicality.

The thickness of the substrate described above may be generally 500 $\mu$m or less. The thickness of the substrate is preferably from 5 $\mu$m to 500 $\mu$m, more preferably from 5 $\mu$m to 300 $\mu$m, and further preferably from 10 $\mu$m to 200 $\mu$m. An antistatic layer may be provided on one side or both sides of the substrate in order to prevent charging at the time of peeling. In addition, the surface of the substrate at the side where the pressure-sensitive adhesive layer is provided may be subjected to corona discharge treatment or the like in order to improve adhesiveness to the pressure-sensitive adhesive layer.

The thickness of the pressure-sensitive adhesive layer formed on the substrate may be suitably set depending on the pressure-sensitive adhesive force required for a film for an optical member, the surface roughness of the optical member, and the like. The thickness of the pressure-sensitive adhesive layer may be generally 1 $\mu$m to 100 $\mu$m. The thickness of the pressure-sensitive adhesive layer is preferably 5 $\mu$m to 50 $\mu$m, and further preferably 15 $\mu$m to 30 $\mu$m. The thickness of the pressure-sensitive adhesive layer on the substrate is determined by measuring the thickness at 3 points with a micrometer and calculating the arithmetic average value thereof.

As a method for forming the pressure-sensitive adhesive layer, a method may be adopted in which the pressure-sensitive adhesive composition is not diluted or diluted with a suitable solvent as necessary, and applied directly on a substrate that is a surface protection base film, and dried, and the solvent is removed. Alternatively, the pressure-sensitive adhesive layer may also be formed by a method in which the pressure-sensitive adhesive composition is applied on a release sheet consisting of paper or a suitable film such as a polyester film that is previously subjected to release treatment with a silicone resin or the like, and is heated and dried to form a pressure-sensitive adhesive layer, and then the adhesive layer side of the release sheet is pressure-welded onto a substrate, which is a surface protection base film, to transfer the adhesive layer onto the substrate.

A method for applying the pressure-sensitive adhesive composition is not particularly limited, and may be suitably selected and used from application methods ordinarily used. Examples of the application method may include, for example, blade coating, direct coating, and knife coating.

Thus-obtained film for an optical member is laminated on the surface of the optical member to protect the surface of the optical member from contamination or damage, and when the optical member is processed into a liquid crystal display plate or the like, the optical member is subjected to respective processes such as punching, inspection, transport and assembly of a liquid crystal display plate while maintaining the state in which the film for an optical member is laminated on the optical member, and the optical member is optionally subjected to heating and pressurizing treatment such as autoclave treatment or high temperature aging treatment, and the film for an optical member is peeled and removed from the optical member at a stage where the surface protection becomes unnecessary.

EXAMPLES

The effects of the invention will be specifically described below with Examples and Comparative Examples. However, the invention is not limited to these Examples. Meanwhile, "parts" and "%" are based on the mass unless otherwise stated.

Preparation of solution of acrylic copolymer (A)

(Preparation Example A-1)

Into a reaction vessel provided with a thermometer, a stirrer, a nitrogen introduction tube and a reflux condenser, 35.0 parts by mass of ethyl acetate was put. Into a separate vessel, 55.0 parts by mass of 2-ethylhexyl acrylate (2EHA), 42.0 parts by mass of n-butyl acrylate (BA) and 3.0 parts by mass of 4-hydroxybutyl acrylate (4HBA) were put and mixed to prepare a monomer mixture, and 15% by mass of the monomer mixture was added to the reaction vessel, and then the reaction vessel was heated to the reflux temperature with stirring under nitrogen atmosphere. Then, a mixed solution prepared by mixing the whole of the remaining monomer mixture, 10 parts by mass of ethyl acetate, 10 parts by mass of toluene and 0.1 parts by mass of azobisisobutyronitrile was successively added to the reaction vessel at the reflux temperature over 100 minutes, and continuously the reaction was carried out for 45 minutes while maintaining the reflux temperature. Furthermore, then, a solution prepared by mixing 15 parts by mass of ethyl acetate and 0.2 parts by mass of t-butylperoxy pivalate was successively added to the reaction vessel at the reflux temperature over 60 minutes, and continuously the reaction was carried out for further 80 minutes at the reflux state. After completion of the reaction, the reaction solution was suitably diluted with ethyl acetate to give a solution of an acrylic copolymer (A-1) having a solid content of 50% by mass. The solid content, the glass transition temperature (Tg), the weight average molecular weight (Mw), the viscosity, and the ratio of the weight average molecular weight (Mw) with respect to the number average molecular weight, that is, the dispersity (Mw/Mn) of the obtained solution of the acrylic copolymer (A-1) are shown in Table 1. Meanwhile, "-" in Table 1 represents no blending.

In addition, "the solid content" represents the residual amount after removal of the solvent from the acrylic copolymer solution. The viscosity was measured at 25°C and 10 rpm rotation number using a BH type viscometer. The glass transition temperature (Tg) was calculated with the method mentioned previously, and the weight average molecular weight (Mw) was measured with the method mentioned previously.

(Preparation Examples A-2 to A-12)

The solutions of the acrylic copolymers (A-2) to (A-12) were prepared in the same manner as in Preparation Example A-1 except that the composition of the monomers was changed to the compositions of the monomers shown in Table 1, and the amount of the initiator and the like were suitably adjusted. The solid content, the glass transition temperature (Tg), the weight average molecular weight (Mw) and the dispersity (Mw/Mn) of the obtained solution of the acrylic copolymer are shown in Table 1.

Table 1

| | Acrylic copolymer (A) | Composition of monomers | | | | | | Properties value | | | |
|---|---|---|---|---|---|---|---|---|---|---|---|
| | | 2EHA | n-OA | BA | EA | MA | 4HBA | Solid content (%) | Tg (°C) | Mw | Mw/Mn |
| Preparation Example A-1 | A-1 | 55.0 | - | 42.0 | - | - | 3.0 | 50 | -67 | 430,000 | 8.7 |
| Preparation Example A-2 | A-2 | 97.0 | - | - | - | - | 3.0 | 50 | -75 | 400,000 | 9.3 |
| Preparation Example A-3 | A-3 | 15.0 | - | 82.0 | - | - | 3.0 | 50 | -59 | 460,000 | 7.7 |
| Preparation Example A-4 | A-4 | 42.0 | - | 55.0 | - | - | 3.0 | 50 | -65 | 400,000 | 7.6 |
| Preparation Example A-5 | A-5 | 27.0 | - | 70.0 | - | - | 3.0 | 50 | -62 | 440,000 | 8.0 |
| Preparation Example A-6 | A-6 | 55.0 | - | 43.0 | - | - | 2.0 | 50 | -67 | 350,000 | 7.2 |
| Preparation Example A-7 | A-7 | 55.0 | - | 40.0 | - | - | 5.0 | 50 | -67 | 390,000 | 8.3 |
| Preparation Example A-8 | A-8 | - | 55.0 | - | 42.0 | - | 3.0 | 50 | -59 | 400,000 | 7.8 |
| Preparation Example A-9 | A-9 | - | 55.0 | - | - | 42.0 | 3.0 | 50 | -50 | 410,000 | 8.0 |
| Preparation Example A-10 | A-10 | 55.0 | - | 42.0 | - | - | 3.0 | 50 | -67 | 200,000 | 5.3 |
| Preparation Example A-11 | A-11 | 82.0 | - | 15.0 | - | - | 3.0 | 50 | -72 | 440,000 | 8.7 |
| Preparation Example A-12 | A-12 | 67.0 | - | 30.0 | - | - | 3.0 | 50 | -69 | 430,000 | 8.6 |

Preparation of polyoxyalkylene group-containing copolymer (B)

(Preparation Example B-1)

Into a reaction vessel provided with a stirring blade, a thermometer, a nitrogen gas introduction tube, a condenser and a dropping funnel, 100.0 parts by mass of methylethyl ketone were put, and the reaction vessel was heated to the reflux temperature with stirring under nitrogen atmosphere. A mixed solution of 10 parts by mass of methoxypolyethylene glycol methacrylate (average addition mole number of alkylene oxide units: 23), 90 parts by mass of t-butyl methacrylate, 100 parts by mass of methylethyl ketone and 5.0 parts by mass of azobisisobutyronitrile, which had been previously mixed, was put into the dropping funnel, and successively added to the reaction vessel at the reflux temperature over 120 minutes. Then, the reaction was carried out for 240 minutes while maintaining the reflux temperature, and the reaction was completed. The solid content and the weight average molecular weight (Mw) of the obtained solution of the polyoxyalkylene group-containing copolymer (B-1) are shown in Table 2.

(Preparation Examples B-2 and B-3)

Solutions of xide chain-containing copolymers (B-2) and (B-3) were prepared in the same manner as in Preparation Example B-1 except that the composition of the monomers was changed to the composition of the monomers shown in Table 2, and the amount of the initiator and the like were suitably adjusted. The solid content and the weight average molecular weight (Mw) of the obtained polyoxyalkylene group-containing copolymer solution are shown in Table 2.

Table 2

| Item | Polyoxyalkylene group-containing copolymer (B) | Composition of monomers | | Properties value | |
|---|---|---|---|---|---|
| | | t-BMA | MePEGMA | Solid content (%) | Mw |
| Preparation Example B-1 | B-1 | 90 | 10 | 34 | 7000 |
| Preparation Example B-2 | B-2 | 70 | 30 | 34 | 7000 |
| Preparation Example B-3 | B-3 | 50 | 50 | 34 | 7000 |
| Preparation Example B-4 | B-4 | 30 | 70 | 34 | 7000 |

Meanwhile, the abbreviations of the respective additives in Tables 1 and 2 are as follows. In addition, in calculation of the glass transition temperature (Tg) in Table 1, the glass transition temperatures (Tg) of the homopolymers of respective monomers shown below were used.
2EHA: 2-ethylhexyl acrylate (Tg: -76°C)
n-OA: n-octyl acrylate (Tg: -80°C)
BA: n-butyl acrylate (Tg: -57°C)
EA: ethyl acrylate (Tg: -27°C)
MA: methyl acrylate (Tg: 5°C)
4HBA: 4-hydroxybutyl acrylate (Tg: -30°C)
t-BMA: t-butyl methacrylate
MePEGMA: methoxypolyethylene glycol methacrylate (average addition mole number of alkylene oxide units: 23)

[Example 1] Preparation of pressure-sensitive adhesive composition for film for optical member

A four-necked flask provided with a stirring blade and a thermometer was charged with 100 parts by mass (50 parts by mass as the solid content) of the solution of the acrylic copolymer (A-1) obtained in Preparation Example A-1, 0.6 parts by mass (0.4 parts by mass as an active ingredient with respect to 100 parts by mass of the acrylic copolymer (A)) of the solution of the polyoxyalkylene group-containing copolymer (B-1) obtained in Preparation Example B-1, 0.05 parts by mass (0.1 parts by mass as an active ingredient with respect to 100 parts by mass of the acrylic copolymer (A)) of $LiCF_3SO_3$ (hereinafter, may be briefly referred to as "LiTFS") as the alkali metal salt (C) and 0.01 parts by mass (0.02 parts by mass as an active ingredient with respect to 100 parts by mass of the acrylic copolymer (A)) of dibutyl tin dilaurate, and mixing and stirring were performed for 4.0 hours while keeping the liquid temperature in the flask at around 25°C, to give a mixed solution of the acrylic copolymers. To this mixed solution was added 0.075 parts by mass (0.15 parts by mass as an active ingredient with respect to 100 parts by mass of the acrylic copolymer (A)) of SH-8400 as the dimethylsiloxane compound (D), and 0.75 parts by mass of N3300 (isocyanate compound having an isocyanurate structure that is a trimer of hexamethylene diisocyanate manufactured by Sumitomo Bayer Urethane Co., Ltd., 1.5 parts by mass as an active ingredient with respect to 100 parts by mass of the acrylic copolymer (A)) as the isocyanate compound, and the mixture was sufficiently stirred, to give the pressure-sensitive adhesive composition for a film for an optical member shown in Table 3.

(Preparation of test adhesive sheet)

A test adhesive sheet as a film for an optical member was obtained by the following procedures using the pressure-sensitive adhesive composition obtained above.
The pressure-sensitive adhesive composition was applied on a polyethylene terephthalate (PET) film [trade name; TEIJIN TETORON film, Type G2, 38 μm thickness; manufactured by Teijin DuPont Films Japan Limited] to have a coating amount of 20 g/m2 after drying using an applicator, and dried at 100°C for 60 seconds with a hot wind circulation type drier to form a pressure-sensitive adhesive layer. Then, the pressure-sensitive adhesive layer was placed on a release film surface-treated with a silicone-based release agent such that the pressure-sensitive adhesive layer side was in contact with the release film, and pressed through pressing nip rolls to bond them, and then stored at 23°C and 50% RH for 3 days to give the test adhesive sheet.

[Examples 2 to 16 and Comparative Examples 1 to 9]

The pressure-sensitive adhesive compositions for a film for an optical member as shown in Table 3 were prepared, respectively, in the same manner as in Example 1 except that the blending conditions for the respective Examples and Comparative Examples shown in Table 3 were used instead of the blending conditions of Example 1. Using these pressure-sensitive adhesive compositions, the test adhesive sheets were prepared respectively in accordance with the method of preparing the test adhesive sheet described above.

Table 3

| | Solution of acrylic copolymer (A) | | Solution of polyoxyalkylene group-containing copolymer (B) | | | Metal salt (C) | | | Crosslinking agent | | | Dimethylpolysiloxane compound (D) | | | | Curing catalyst | | |
|---|---|---|---|---|---|---|---|---|---|---|---|---|---|---|---|---|---|---|
| | Kind | Content (parts) | Kind | Content (parts) | Dry ratio | Kind | Content (parts) | Dry ratio | Kind | Content (parts) | Dry ratio | Kind | HLB value | Content (parts) | Dry ratio | Kind | Content (parts) | Dry ratio |
| Example 1 | A-1 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 2 | A-1 | 100 | B-1 | 1.5 | 1.0 | LiTFS | 0.05 | 0.1 | N-3300 | 0.75 | 1.5 | SH-8400 | 7 | 0.075 | 0.150 | DBTDL | 0.01 | 0.02 |
| Example 3 | A-1 | 100 | B-1 | 0.6 | 0.4 | LiTFS | 0.05 | 0.1 | N-3300 | 0.75 | 1.5 | SH-8400 | 7 | 0.100 | 0.200 | DBTDL | 0.01 | 0.02 |
| Example 4 | A-4 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 5 | A-5 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 6 | A-6 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 7 | A-7 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 8 | A-8 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 9 | A-9 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 10 | A-10 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 11 | A-1 | 100 | B-2 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 12 | A-1 | 100 | B-3 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Example 13 | A-1 | 100 | B-1 | 0.6 | 0.4 | LiTFSI | 0.05 | 0.1 | N-3300 | 0.75 | 1.5 | SH-8400 | 7 | 0.075 | 0.150 | DBTDL | 0.01 | 0.02 |
| Example 14 | A-1 | 100 | B-1 | 0.6 | 0.4 | LiTFS | 0.05 | 0.1 | N-3300 | 0.75 | 1.5 | L-7001 | 5 | 0.075 | 0.150 | DBTDL | 0.01 | 0.02 |
| Example 15 | A-1 | 100 | B-1 | 0.6 | 0.4 | LiTFS | 0.05 | 0.1 | N-3300 | 0.75 | 1.5 | SH-3773M | 8 | 0.075 | 0.150 | DBTDL | 0.01 | 0.02 |
| Example 16 | A-1 | 100 | B-1 | 0.6 | 0.4 | LiTFS | 0.05 | 0.1 | N-3300 | 0.75 | 1.5 | SH-3773M | 8 | 0.150 | 0.300 | DBTDL | 0.01 | 0.02 |
| Comparative Example 1 | A-2 | 100 | B-1 | 0.6 | 0.4 | LiTFS | 0.05 | 0.1 | N-3300 | 0.75 | 1.5 | KP-355 | 10 | 0.075 | 0.150 | DBTDL | 0.01 | 0.02 |
| Comparative Example 2 | A-3 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |

(continued)

| | Solution of acrylic copolymer (A) | | Solution of polyoxyalkylene group-containing copolymer (B) | | | Metal salt (C) | | | Crosslinking agent | | | Dimethylpolysiloxane compound (D) | | | | Curing catalyst | | |
|---|---|---|---|---|---|---|---|---|---|---|---|---|---|---|---|---|---|---|
| | Kind | Content (parts) | Kind | Content (parts) | Dry ratio | Kind | Content (parts) | Dry ratio | Kind | Content (parts) | Dry ratio | Kind | HLB value | Content (parts) | Dry ratio | Kind | Content (parts) | Dry ratio |
| Comparative Example 3 | A-1 | 100 | B-1 | 0.6 | 0.4 | - | | | N-3300 | 0.75 | 1.5 | SH-8400 | 7 | 0.075 | 0.150 | DBTDL | 0.01 | 0.02 |
| Comparative Example 4 | A-2 | 100 | B-1 | 0.6 | 0.4 | LiTFS | 0.05 | 0.1 | N-3300 | 0.75 | 1.5 | KP-355 | 10 | 0.150 | 0.300 | DBTDL | 0.01 | 0.02 |
| Comparative Example 5 | A-1 | 100 | B-1 | 0.6 | 0.4 | LiTFS | 0.05 | 0.1 | N-3300 | 0.75 | 1.5 | KP-355 | 10 | 0.150 | 0.300 | DBTDL | 0.01 | 0.02 |
| Comparative Example 6 | A-11 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Comparative Example 7 | A-12 | 100 | B-1 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Comparative Example 8 | A-1 | 100 | B-4 | 0.6 | 0.4 | LiTFS | 0.05 | 0.1 | N-3300 | 0.75 | 1.5 | SH-8400 | 7 | 0.075 | 0.150 | DBTDL | 0.01 | 0.02 |
| Comparative Example 9 | A-1 | 100 | B-1 | 0.6 | 0.4 | LiTFS | 0.05 | 0.1 | N-3300 | 0.75 | 1.5 | FZ-2104 | 14 | 0.075 | 0.150 | DBTDL | 0.01 | 0.02 |

Meanwhile, the abbreviations of the respective additives in Table 3 are as follows. The value described as Dry ratio is the mass ratio of each active ingredient when the solid content of the acrylic copolymer (A) is taken as 100.
LiTFS: $LiCF_3SO_3$, alkali metal salt (C)
LiTFSI: $Li(CF_3SO_2)_2N$, alkali metal salt (C)
N-3300: Isocyanate compound having isocyanurate structure which is a trimer of hexamethylene diisocyanate manufactured by Sumitomo Bayer Urethane Co., Ltd., trade name: DESMODUR N3300, 100% by mass of active ingredient, crosslinking agent (isocyanate compound)
SH-8400: Dimethylsiloxane compound with a polyoxyalkylene group introduced to the side chain, manufactured by Dow Coming Toray Co., Ltd., wherein the terminal of the polyoxyalkylene group is an acetyloxy group, HLB value = 7, the dimethylpolysiloxane compound (D) ingredient
L-7001: Dimethylsiloxane compound with a polyoxyalkylene group introduced to the side chain, manufactured by Dow Coming Toray Co., Ltd., wherein the terminal of the polyoxyalkylene group is a methoxy group, HLB value = 5, the dimethylpolysiloxane compound (D) ingredient
SH-3773M: Dimethylsiloxane compound with a polyoxyalkylene group introduced to the side chain, manufactured by Dow Coming Toray Co., Ltd., wherein the terminal of the polyoxyalkylene group is a hydroxyl group, HLB value = 8, the dimethylpolysiloxane compound (D) ingredient
FZ-2104: Dimethylsiloxane compound with a polyoxyalkylene group introduced to the side chain, manufactured by Dow Coming Toray Co., Ltd., wherein the terminal of the polyoxyalkylene group is a methoxy group, HLB value = 14
KP-355: Dimethylpolysiloxane compound with a polyoxyalkylene group introduced, manufactured by Shin-Etsu Chemical Co., Ltd., HLB value = 10
DBTDL: Dibutyl tin dilaurate, curing catalyst

[Evaluation]

(Pressure-sensitive adhesive force)

The test adhesive sheet prepared above was cut into 25 mm x 150 mm. Then, using a desktop laminating machine, while the release film was peeled from the test adhesive sheet, the surface of the pressure-sensitive adhesive layer was pressed onto an anti-glare-treated polarizing film, thereby obtaining a test sample. This test sample was stored for 24 hours under the conditions of 23°C and 50% RH. Then, the pressure-sensitive adhesive force at 180° peeling was measured at a peeling rate of 300 mm/minute (low rate) or 30 m/minute (high rate). The results are shown in Table 4.
The pressure-sensitive adhesive force at a peeling rate of 300 mm/minute is preferably 0.07 N/25 mm or more, since sliding on the surface of the member or coming off from the surface does not occur during the time when the surface protection for the optical member is necessary.
In addition, the pressure-sensitive adhesive force at a peeling rate of 30 m/minute is preferably 2.0 N/25 mm or less, since the peeling workability is good.

(Anti-adhesive transfer property)

The test adhesive sheet prepared above was cut into 20 mm x 150 mm. Then, using a desktop laminating machine, while the release film was peeled from the test adhesive sheet, the surface of the pressure-sensitive adhesive layer was pressed onto a clear polarizing film (not surface-treated), thereby obtaining a test sample. A ballpoint pen was fixed vertically onto the PET film surface of this test sample, and 500 g of a load was applied thereto, and three reciprocating scratch at a rate of 1 mm/s was carried out on the sample for a distance of 30 mm with the ballpoint pen to perform the scratch test. After the scratch test, the test adhesive sheet was peeled from the test sample, and the transfer state of the pressure-sensitive adhesive composition onto the clear polarizing film was evaluated in accordance with the evaluation criteria described below by visual observation from the surface of the clear polarizing film. The results are shown in Table 4.

(Evaluation criteria)

A: No transfer of the pressure-sensitive adhesive composition was recognized at all.
B: Transfer of the pressure-sensitive adhesive composition was hardly recognized, but a trace of transfer was slightly recognized.
C: Transfer of the pressure-sensitive adhesive composition was somewhat recognized in a level of being practically problematic.

D: Transfer of the pressure-sensitive adhesive composition was recognized.

(Fittability)

The test adhesive sheet prepared above was cut into 200 mm x 150 mm. Then, the release film was peeled, and the surface of the pressure-sensitive adhesive layer was attached to an anti-glare-treated polarizing film from the central portion under the conditions of 23°C and 50% RH, and the time for wet spreading by the natural gravity was measured and evaluated in accordance with the evaluation criteria described below. The results are shown in Table 4.

(Evaluation criteria)

A: Time until complete fit was achieved to the edge was less than 45 seconds.
B: Time until complete fit was achieved to the edge was from 45 seconds to 60 seconds.
C: Time until complete fit was achieved to the edge was 60 seconds or more, or complete fit was not achieved to the edge.

(Peeling-charged electrostatic potential)

The test adhesive sheet prepared above was cut into 25 mm x 150 mm. Then, using a desktop laminating machine, while the release film was peeled from the test adhesive sheet, the surface of the pressure-sensitive adhesive layer was pressed onto an anti-glare-treated polarizing film, thereby obtaining a test sample. This test sample was stored for 24 hours under the conditions of 23°C and 50% RH (conditioning treatment), and then 180° peeling was carried out at a peeling rate of 30 m/minute (high rate peeling condition). The electric potential generated at this time on the surface of the polarizing plate was measured with an electrometer [KSD-0303 manufactured by KASUGA ELECTRIC WORKS LTD.] fixed at a prescribed position as shown in Fig. 1. The measurement was performed under the environments of 23°C and 50% RH. The results are shown in Table 4.
The absolute value of the peeling-charged electrostatic potential at the time when peeling is carried out at a peeling rate of 30 m/minute is preferably 0.3 kV or less, since generation of static electricity caused by peeling charging at the time when the surface protection film is peeled from the optical member is small, and destruction of the circuit of a liquid crystal display device or adsorption of dirt or dust on the surface of the optical member does not occur.

(Adhesiveness to substrate)

The release film was peeled from the test adhesive sheet prepared above, and 100 cross-cut sections with 2 mm width x 2 mm width were formed on the pressure-sensitive adhesive layer with a cutter. The cross-cut sections were strongly rubbed three times with a finger, and it was visually observed whether or not the rubbed portion of the pressure-sensitive adhesive layer was peeled from the substrate. In addition, the number of the peeled cross-cut sections was counted, the ratio (%) thereof with respect to the total number of the cross-cut sections was determined, and evaluation was carried out in accordance with the evaluation criteria described below. The results are shown in Table 4.

(Evaluation criteria)

A: There was no peeling, or less than 5% of the cross-cut sections were observed to be peeled, but there was no practical problem.
B: 5% or more of the cross-cut sections were observed to be peeled, which was practically problematic.
C: Overall peeling was observed.

Table 4

| | Pressure-sensitive adhesive force (N/25 mm) | | Peeling-charged electrostatic potential (kV) | Anti-adhesive transfer property | Fittability | Adhesiveness to substrate |
|---|---|---|---|---|---|---|
| | High rate | Low rate | | | | |
| Example 1 | 0.73 | 0.08 | -0.05 | A | A | A |
| Example 2 | 0.83 | 0.08 | -0.05 | A | A | A |
| Example 3 | 0.75 | 0.07 | -0.05 | A | A | A |
| Example 4 | 1.00 | 0.10 | -0.22 | A | A | A |
| Example 5 | 1.09 | 0.12 | -0.10 | A | B | A |
| Example 6 | 1.00 | 0.10 | -0.15 | A | A | A |
| Example 7 | 0.70 | 0.07 | -0.05 | A | A | A |
| Example 8 | 1.02 | 0.10 | -0.08 | A | B | A |
| Example 9 | 1.11 | 0.12 | -0.09 | A | B | A |
| Example 10 | 1.15 | 0.11 | -0.11 | A | A | A |
| Example 11 | 1.06 | 0.09 | -0.19 | A | A | A |
| Example 12 | 0.71 | 0.07 | -0.13 | A | A | A |
| Example 13 | 0.70 | 0.07 | -0.05 | A | A | A |
| Example 14 | 0.80 | 0.07 | -0.10 | A | A | A |
| Example 15 | 1.35 | 0.09 | -0.05 | A | A | A |
| Example 16 | 1.06 | 0.09 | -0.05 | A | A | A |
| Comparative Example 1 | 0.78 | 0.07 | -0.40 | B | A | B |
| Comparative Example 2 | 1.15 | 0.14 | -0.25 | C | B | A |
| Comparative Example 3 | 0.75 | 0.08 | -1.70 | A | A | A |
| Comparative Example 4 | 0.60 | 0.04 | -0.10 | A | A | B |
| Comparative Example 5 | 0.85 | 0.07 | -0.49 | A | A | A |
| Comparative Example 6 | 0.64 | 0.05 | -0.05 | A | A | B |
| Comparative Example 7 | 0.71 | 0.05 | -0.25 | A | A | A |
| Comparative Example 8 | 0.47 | 0.03 | -0.90 | A | A | B |
| Comparative Example 9 | 0.75 | 0.07 | -1.20 | A | A | A |

From Table 4, it is understood that the pressure-sensitive adhesive composition of the invention has small generation of static electricity caused by peeling charging, and is excellent in adhesiveness and anti-adhesive transfer property. Furthermore, it is understood that the pressure-sensitive adhesive composition of the invention is also excellent in fittability and adhesiveness to a substrate.

The disclosure of Japanese Patent Application No. 2011-070407 is incorporated herein by reference in its entirety.

All publications, patent applications, and technical standards mentioned in this specification are herein incorporated by reference to the same extent as if each individual publication, patent application, or technical standard was specifically and individually indicated to be incorporated by reference.

## Claims

1. A pressure-sensitive adhesive composition comprising:

an acrylic copolymer (A) containing 40% to 80% by mass of a constituent unit derived from a (meth)acrylic acid alkyl ester having a $C_{1-5}$ alkyl group, 10% to 59.9% by mass of a constituent unit derived from a (meth)acrylic acid alkyl ester having a $C_{6-18}$ alkyl group, and 0.1 % to 10% by mass of a constituent unit derived from a monomer having a hydroxyl group;
a polyoxyalkylene group-containing copolymer (B) containing a constituent unit derived from a polyoxyalkylene group-containing monomer having an average addition mole number of alkylene oxide units of 20 or more and a constituent unit derived from a monomer other than the polyoxyalkylene group-containing monomer, the copolymer (B) having a content ratio of the constituent unit derived from the polyoxyalkylene group-containing monomer of 60% by mass or less, and the copolymer (B) having a weight average molecular weight of from 3,000 to 100,000;
an alkali metal salt (C); and
a dimethylpolysiloxane compound (D) having a polyoxyalkylene group in a molecule and having an HLB value of 9 or less.

2. The pressure-sensitive adhesive composition according to claim 1, wherein the HLB value of the dimethylpolysiloxane compound (D) is from 5 to 8.

3. The pressure-sensitive adhesive composition according to claim 1 or 2, wherein a content of the polyoxyalkylene group-containing copolymer (B), and a content of the alkali metal salt (C) are from 0.05 to 2.0 parts by mass, and from 0.01 to 0.6 parts by mass, respectively, with respect to 100 parts by mass of the acrylic copolymer (A).

4. The pressure-sensitive adhesive composition according to any one of claims 1 to 3, wherein a content of the dimethylpolysiloxane compound (D) is from 0.01 to 1.0 parts by mass with respect to 100 parts by mass of the acrylic copolymer (A).

5. The pressure-sensitive adhesive composition according to any one of claims 1 to 4, wherein the (meth)acrylic acid alkyl ester having a $C_{1-5}$ alkyl group is n-butyl (meth)acrylate.

6. The pressure-sensitive adhesive composition according to any one of claims 1 to 5, wherein the (meth)acrylic acid alkyl ester having a $C_{6-18}$ alkyl group is 2-ethylhexyl acrylate.

7. A film for an optical member, comprising:

a substrate; and
a pressure-sensitive adhesive layer that is provided on the substrate and is a coating film of the pressure-sensitive adhesive composition according to any one of claims 1 to 6.

FIG.1

ELECTROMETER

FILM FOR OPTICAL MEMBER

25mm

10mm

100mm

GLASS PLATE

POLARIZING PLATE

INSULATOR

<table>
<tr><td colspan="2" align="center"><strong>INTERNATIONAL SEARCH REPORT</strong></td><td colspan="2">International application No.<br>PCT/JP2012/057800</td></tr>
</table>

A. CLASSIFICATION OF SUBJECT MATTER
*C09J133/06*(2006.01)i, *C09J7/02*(2006.01)i, *C09J11/02*(2006.01)i, *C09J133/08*(2006.01)i, *C09J133/14*(2006.01)i, *C09J183/12*(2006.01)i, *G02B5/30*(2006.01)i

According to International Patent Classification (IPC) or to both national classification and IPC

B. FIELDS SEARCHED

Minimum documentation searched (classification system followed by classification symbols)
C09J133/06, C09J7/02, C09J11/02, C09J133/08, C09J133/14, C09J183/12, G02B5/30

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-275128 A  (Nippon Carbide Industries Co., Inc.),<br>26 November 2009 (26.11.2009),<br>claims; example 6; tables 1 to 3<br>(Family: none) | 1-7 |
| A | WO 2006/137559 A1  (Toyo Ink Manufacturing Co., Ltd.),<br>28 December 2006 (28.12.2006),<br>claims; example 7; table 1<br>& CN 101208403 A        & KR 10-2008-0024215 A | 1-7 |
| A | JP 2005-263959 A  (Dainippon Ink and Chemicals, Inc.),<br>29 September 2005 (29.09.2005),<br>claims 3, 5; paragraph [0020]<br>(Family: none) | 1-7 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 May, 2012 (24.05.12) | Date of mailing of the international search report<br>05 June, 2012 (05.06.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/057800 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2006/112420 A1  (Kaneka Corp.),<br>26 October 2006 (26.10.2006),<br>claim 2; paragraphs [0015] to [0016]<br>& US 2009/0082488 A1    & EP 1873175 A1 | 1-7 |
| A | JP 2008-31293 A  (Lintec Corp.),<br>14 February 2008 (14.02.2008),<br>claims<br>(Family: none) | 1-7 |
| A | JP 2010-202692 A  (Nitto Denko Corp.),<br>16 September 2010 (16.09.2010),<br>claims; paragraph [0110]<br>& EP 2402409 A1          & WO 2010/098314 A1<br>& TW 201035268 A         & CN 102307963 A | 1-7 |
| A | JP 2009-91406 A  (Nippon Carbide Industries Co.,<br>Inc.),<br>04 October 2009 (04.10.2009),<br>claims; example 2; tables 1 to 2<br>(Family: none) | 1-7 |
| P,A | JP 2011-236267 A  (Nippon Carbide Industries<br>Co., Inc.),<br>24 November 2011 (24.11.2011),<br>claims; examples 1 to 5; table 2<br>(Family: none) | 1-7 |

Form PCT/ISA/210 (continuation of second sheet) (July 2009)

**REFERENCES CITED IN THE DESCRIPTION**

**Patent documents cited in the description**

- JP 2009275128 A

- JP 2011070407 A